## Europäisches Patentamt
## European Patent Office
## Office européen des brevets

(19)

(11) Publication number: **0 058 558**
**B1**

(12)

# EUROPEAN PATENT SPECIFICATION

(45) Date of publication of patent specification: **21.05.86**

(21) Application number: **82300768.7**

(22) Date of filing: **16.02.82**

(51) Int. Cl.⁴: **C 04 B 16/06, C 04 B 32/02, D 01 D 5/42**

(54) **Manufactured articles based on hydraulic binders.**

(30) Priority: **17.02.81 IT 1979781**

(43) Date of publication of application:
**25.08.82 Bulletin 82/34**

(45) Publication of the grant of the patent:
**21.05.86 Bulletin 86/21**

(84) Designated Contracting States:
**AT BE CH DE FR GB LI NL SE**

(56) References cited:
**EP-A-0 026 581**
**FR-A-2 074 347**
**FR-A-2 109 869**
**GB-A-2 025 841**

(73) Proprietor: **Montedison S.p.A.**
**Patents & Licensing Dept. Foro Buonaparte, 31**
**P.O. Box 10528**
**I-20121 Milan (IT)**

(72) Inventor: **Camprincoli, Pierpaolo**
**73, Via Guglielmi**
**Terni (IT)**

(74) Representative: **Whalley, Kevin et al**
**Marks & Clerk 57/60 Lincoln's Inn Fields**
**London WC2A 3LS (GB)**

Courier Press, Leamington Spa, England.

## Description

This invention relates to manufactured articles based on hydraulic binders.

French Patent No. FR—A—2,109,869 describes a process for the fabrication of fibres comprising a fibrillation of a film of an orientable film-forming polymer having incorporated for example 10% by weight of calcium carbonate.

French Patent No. FR—A—2,074,347 describes a similar process for the fabrication of fibres which comprises the fibrillation of a film of polypropylene having incorporated for example 17 to 29% by weight of calcium carbonate. Magnesium carbonate is also mentioned as a filler material.

British Patent No. 1 073 741 describes the preparation of flat or tubular net-like structures, consisting of interconnected filaments of longitudinally oriented synthetic polymers, by forming, by means of suitable cutting devices, a set of parallel and spaced slots in a flat or tubular mono-oriented polymeric film, so that successive transverse expansion of the film may provide such a net-like structure.

Analogous net-like structures, though consisting of much more irregularly and random interconnected filaments, are also obtainable by disaggregation or slitting of mono-oriented polymeric films according to different methods such as sandblasting, brushing and rubbing.

The products thus obtained are generally bulky and flexible and are employed for manufacturing ropes, cords, strings and different kinds of textile materials.

It is also known, from Spanish Patent No. 460 292, to utilize structures of such type, opened by transverse extension, in manufactured articles based on inorganic hydraulic binders in order to attain an improvement in the mechanical properties thereof.

Due to the chemical inconsistency of the synthetic polymers in general with the inorganic materials forming the hydraulic binders, the thus utilized polymeric structures adhere insufficiently to the binder materials, as a result of which the reinforcing action is not thoroughly effective.

British Patent No. 1 316 661 discloses a process aimed at improving the characteristics of articles prepared from hydraulic binders, by reinforcement with fibres of synthetic polymers, additioned with 20—80% of cements. In such a case the fibres are of conventional type, with a high count (higher than 50 deniers), and are cut in staple fibres of 5—30 mm length.

Similar fibrous compositions, to be used in the reinforcement of articles prepared from hydraulic binders, are also described in Japanese Patent Application No. 74/48721.

The utilization of such reinforcement causes some difficulties in the production of fibres, owing to the high amount of additive contained therein, and does not allow manufactured articles based on hydraulic binders to be obtained having satisfactory characteristics. In particular, the flexural strength of the reinforced articles is only slightly higher than that of non-reinforced articles.

The applicants have now found that the mechanical properties of manufactured articles based on inorganic hydraulic binders can be considerably improved by using as a reinforcement opened fibrillated polymer films or net-like structures containing from 1% to 30% of carbonates of alkaline-earth metals, in particular of calcium carbonate.

Accordingly the present invention provides a manufactured article based on a hydraulic binder, comprising alternate layers of hydraulic binder and layers of at least one opened, fibrillated polymer film or net-like structure, characterized in that the fibrillated polymer film or net-like structure incorporates from 1 to 30% by weight, preferably from 3 to 20% by weight, of at least one carbonate of an alkaline-earth metal, in particular of calcium carbonate.

Preferably, the fibrillated films or the flat net-like structures have a surface area of at least 0.2 $m^2/g$, more preferably from 0.25 to 1.3 $m^2/g$.

They may consist of any stretchable film-forming synthetic polymer, such as polyolefins, polyamides, vinyl polymers, polyester resins and mixtures of such polymers, and in particular olefinic polymers prepared with stereo-specific catalysts, such as polypropylene having predominantly isotactic macromolecules, polyethylene, ethylene-propylene crystalline copolymers containing predominantly propylene, both of the statistical and of the block type, or mixtures thereof.

Mixtures of polypropylene with up to 20% by weight, referred to the mixture, of low-density polyethylene and/or of ethylene-propylene copolymers have proved particularly advantageous for preparing films or structures to be used in articles according to the invention.

The carbonates of alkaline-earth metals to be employed in the present invention are preferably the carbonates of calcium, strontium, barium and magnesium.

A fibrillated film or net-like structure of at least one orientable film-forming synthetic polymer to be used in an article according to the invention may be prepared by the steps of:

(a) preparing a mixture of at least one orientable and film-forming synthetic polymer with 1—30% by weight, calculated on the basis of the mixture, of at least one carbonate of an alkaline-earth metal in powder form, and optionally with 0.05—0.5% by weight of an expanding or swelling agent;

(b) transforming the mixture into a flat or tubular film;

(c) orienting the film in the longitudinal, or prevailingly longitudinal direction, by mechanical stretching, in a stretch ratio of from 1:3 to 1:15, thus forming an oriented film having a thickness of from 20 to 200 microns; and

(d) fibrillating the oriented film.

Some examples of expanding agents employable in the mixture formed in the step (a) are: azodicarbonamide, azobis-isobutyronitrile, dinitro-isopentamethylene-tetramine, and sodium bicarbonate.

The preparation of the film from the mixture of polymer and carbonate of an alkaline-earth metal may be accomplished according to conventional methods, for example extrusion and casting.

The orientation step (c) may be carried out by heat stretching between slow rolls and fast rolls.

Fibrillation of the oriented film is achieved by means of slitting, which is preferably accomplished by conveying the film on surfaces equipped with slitting devices, such as blades and needles, according to the methods described in British Patent No. 1 073 741.

High values of surface area are attainable through such slitting operation, preferably by subjecting the film, prior to slitting, to additional treatment such as surface abrasion with brushes or sandblasting. Methods useful for such purpose are described, for example, in European Patent Publication No. 21017, published on January 7, 1981.

Once obtained, the fibrillated films or net-like structures may be made wettable by oxidizing surface treatments, such as the known flame treatments or those with high-frequency discharges, and also dimensionally stabilized.

The fibrillated films or net-like structures may be in the form of individual elements, or in the form of packs of fibrillated films reciprocally superposed according to various arrangements, in which the individual films are either free in respect of one another, or welded to one another.

Such structures may be used as reinforcements in any type of inorganic hydraulic binder, such as Portland cements, aluminous cements, hydraulic limes, and calcium sulphate.

The invention will be further described with reference to the following illustrative Examples.

Example 1

A mixture was prepared by mixing, in a Battagion mixer having a capacity of 100 litres, the following:

| | |
|---|---|
| polypropylene in the form of flakes (melt index=10; ashes=75 ppm (parts per million); residue of extraction with heptane=97.5% | 35 kg |
| low density polyethylene | 3 kg |
| calcium carbonate | 2 kg. |

The resulting mixture was granulated at 210°C and the granules were extruded to provide a flat film.

The film was stretched in the longitudinal direction, in a stretching ratio of 1:10, at a temperature of 130°C. The thickness of the stretched film was 60 µm.

The mono-axially stretched film was slitted by conveying it on a fibrillating roll equipped with needles. The resulting fibrillated film had a surface area of 0.25 m²/g, determined by absorption of gaseous krypton.

The net-like structure so obtained was opened, in an opening ratio of 1:12. The open net-like structure was then dimensionally stabilized by means of heat-treatment at a temperature of 125°C for 5 minutes.

Composite plates were then prepared by alternating layers of such reticular structures with layers of Portland cement 325, mixed with water in a water/cement weight ratio of 0.35/l, employing 110 nets (with a reticular structure/cement ratio by volume of 9/91), allowing such plates to stand for 24 hours, and then allowing them to cure for 28 days at 25°C.

The three-point flexural strength of the plates, determined on specimens cut from such plates according to the direction of orientation of the films, measured according to standard UNI—3948, was 350 kg/cm² (34.30 N/mm²).

Example 2

The procedure was followed as described in Example 1, except that the starting mixture contained 33 kg of polypropylene 3 kg of low density polyethylene, and 4 kg of calcium carbonate, and that the fibrillated film had a surface area of 0.3 m²/g.

The three-point flexural strength of the plates, determined on specimens cut from composite plates according to the direction of orientation of the films, measured according to standard UNI—3948, was 360 kg/cm² (35.28 N/mm²).

Example 3

A mixture was prepared by mixing, in a Battagion mixer having a capacity of 100 litres, the following:

| | |
|---|---|
| polypropylene in the form of flakes (melt index=10; ashes=75 ppm; residue of extraction with heptane=97.5%) | 35 kg |
| low density polyethylene | 3 kg |
| calcium carbonate | 2 kg |
| azodicarbonamide (expanding agent) | 0.1 kg. |

The resulting mixture was extruded to obtain a flat film.

The film was stretched in the longitudinal direction, in a stretching ratio of 1:8, at a temperature of 130°C. The thickness of the stretched film was 60 µm.

The mono-axially stretched film was slitted by conveying it on a fibrillating roll equipped with needles. The resulting fibrillated film had a surface area of 0.35 m²/g, determined by absorption of gaseous krypton.

The net-like structure so obtained was opened, in an opening ratio of 1:12. The open net-like structure was then dimensionally stabilized by means of heat-treatment at a temperature of 125°C for 5 minutes.

Composite plates were then prepared by alternating layers of such reticular structures with layers of Portland cement 325, mixed with water in a water/cement weight ratio of 0.3/l, employing 100 nets (with a reticular structure/cement ratio by volume of 9/91), allowing such plates to stand for 24 hours, and then allowing them to cure for 28 days at 25°C.

The three-point flexural strength of the plates, determined on specimens cut from such plates according to the direction of orientation of the films, measured according to standard UNI— 3948, was 360 kg/cm$^2$ (35.28 N/mm$^2$).

Example 4

A mixture was prepared by mixing, in a Battagion mixer having a capacity of 100 litres, the following:

|  |  |
|---|---|
| polypropylene in the form of flakes (melt index=10; ashes=75 ppm; residue of extraction with heptane= 97.5%) | 35 kg |
| low density polyethylene | 3 kg |
| barium carbonate | 2 kg. |

From such mixture, by operating according to Example 1, a fibrillated film was prepared, which, after opening in a ratio of 1:9 and dimensional stabilization, was utilized for preparing composite cement plates. Such plates were obtained by alternating layers of reticular structures with Portland cement 325, mixed with water in a water/cement weight ratio of 0.3/l, employing 120 nets (with a reticular structure/cement ratio by volume of 8/92), allowing such plates to stand for 24 hours, and then allowing them to cure for 28 days at 25°C.

The three-point flexural strength of the plates, determined on specimens cut from such plates according to the direction of orientation of the films, measured according to standard UNI— 3948, was 345 kg/cm$^2$ (33.81 N/mm$^2$).

## Claims

1. A manufactured article based on a hydraulic binder, comprising alternate layers of hydraulic binder and layers of at least one opened, fibrillated polymer film or net-like structure, characterized in that the fibrillated polymer film or net-like structure incorporates from 1 to 30% by weight of at least one carbonate of an alkaline-earth metal.

2. An article as claimed in claim 1, characterized in that the said polymer is polypropylene.

3. An article as claimed in claim 1, characterized in that the said polymer comprises a mixture of polypropylene with up to 20% by weight of low density polyethylene.

4. An article as claimed in any of claims 1 to 3, characterized in that the carbonate of an alkaline-earth metal is a carbonate of calcium, barium, strontium or magnesium.

5. An article as claimed in any of claims 1 to 4, characterized in that the said film or structure has incorporated therein from 3 to 20% by weight of calcium carbonate.

## Patentansprüche

1. Gefertigter Gegenstand auf der Basis eines hydraulischen Bindemittels, umfassend alternierende Schichten eines hydraulischen Bindemittels und Schichten aus mindestens einem geöffneten, Fibrillen-artigen Polymerfilm oder einer netzartigen Struktur, dadurch gekennzeichnet, daß der Fibrillen-artige Polymerfilm oder die netzartige Struktur 1 bis 30 Gew.-% mindestens eines Carbonates eines Erdalkalimetalls einverleibt enthält.

2. Gegenstand nach Anspruch 1, dadurch gekennzeichnet, daß das Polymer Polypropylen ist.

3. Gegenstand nach Anspruch 1, dadurch gekennzeichnet, daß das Polymer eine Mischung aus Polypropylen mit bis zu 20 Gew.-% niedrig dichtem Polyethylen umfaßt.

4. Gegenstand nach einem der Ansprüche 1 bis 3, dadurch gekennzeichnet, daß das Carbonat eines Erdalkalimetalls ein Carbonat von Calcium, Barium, Strontium oder Magnesium ist.

5. Gegenstand nach einem der Ansprüche 1 bis 4, dadurch gekennzeichnet, daß der Film oder die Struktur 3 bis 20 Gew.-% Calciumcarbonat darin einverleibt enthält.

## Revendications

1. Un article manufacturé à base de liants hydrauliques formé de couches alternées de liant hydraulique et de couches d'au moins une pellicule polymère fibrillée ou structure réticulaire ouverte, caractérisé en ce que le film polymère fibrillé ou la structure réticulaire contient de 1 à 30% en poids d'au moins un carbonate d'un métal alcalino-terraux.

2. Un article selon la revendication 1, caractérisé en ce que ledit polymère est le polypropylène.

3. Un article selon la revendication 1, caractérisé en ce que ledit polymère consiste en un mélange de polypropylène contenant jusqu'à 20% en poids de polyéthylène basse densité.

4. Un article selon l'une quelconque des revendications 1 à 3, caractérisé en ce que le carbonate de métal alcalin est un carbonate de calcium, de baryum, de strontium ou de magnésium.

5. Un article selon l'une quelconque des revendications 1 à 4, caractérisé en ce que ledit film ou structure contient de 3 à 20% en poids de carbonate de calcium.